# EUROPEAN PATENT APPLICATION

(11) **EP 4 484 000 A1**
(43) Date of publication of application: **01.01.2025**
(21) Application number: 23182508.4
(22) Date of filing: 29.06.2023
(51) Int. Cl.: B01J 19/32, B01J 19/02

(54) **STRUCTURED CROSS-CHANNEL PACKING ELEMENT FOR FOULING AND CORROSION SENSITIVE APPLICATIONS**

(71) Applicant: Sulzer Management AG, 8401 Winterthur (CH)
(72) Inventor: The designation of the inventor has not yet been filed
(74) Representative: Henkel & Partner mbB

(57) **Abstract**

The present invention relates to a method of contacting a gas with a liquid in a column for mass transfer and/or heat exchange comprising at least one structured cross-channel packing element, wherein the contact of the gas with the liquid may lead to corrosion of the material of the at least one structured cross-channel packing element and/or to the formation of a solid precipitate, wherein the at least one structured cross-channel packing element is a block comprising a plurality of sheets with periodic deformations, wherein the sheets are arranged in the longitudinal direction parallel and in touching contact with each other so that an open space extending from one end to the opposite end of the sheets is provided between them, wherein the open space is defined by the periodic deformations, wherein adjacent sheets are oriented such that the periodic deformations of the adjacent sheets intersect in crisscross fashion with each other, wherein the sheets are non-perforated and made of a plastic, a metal or a metal alloy, and wherein the sheets are held together without any fixation means or with one or more ties or wires surrounding the plurality of sheets of the at least one structured cross-channel packing element.

## Description

The present invention relates to a method of contacting a gas with a liquid in a column for mass transfer and/or heat exchange, wherein the contact of the gas with the liquid may lead to corrosion of the material used in the column and/or to the formation of a solid precipitate. The present invention also relates to a structured cross-channel packing element, to a structured packing bed and to a mass transfer and/or heat exchange column.

Methods of contacting a gas with a liquid in a column for mass transfer and/or heat exchange, such as absorption methods, wherein the contact of the gas with the liquid may lead to corrosion of the material used in the column and/or to the formation of a solid precipitate, are challenging, since the corrosion limits the lifespan of the column and the deposition of solid precipitate limits the capacity and efficiency of the mass transfer and/or heat exchange column. An important example for such a method is the capture of carbon dioxide as solid carbonate salt by contacting in an absorption column a carbon dioxide containing gas with a basic aqueous solution comprising for instance ammonia and calcium chloride so as to convert the carbon dioxide into solid calcium carbonate. Such a method is for instance described in US 10,322,371 B2. However, the capacity as well as the efficiency of the respective absorption method is in need of improvement.

In order to increase the capacity as well as the efficiency of the respective absorption method it would be desirable to improve the mass transfer and heat exchange between the gas phase and the liquid phase, for instance by using one or more column internals, such as contact trays, random packings or structured packings.

However, due to the corrosive nature of the used liquid the respective internal being usually made of steel will deteriorate within short term so that it has to be replaced, which leads to significantly high capital expenditures and operational costs. On account of this reason, mass and heat transfer columns with such internals are not used in such methods being performed in industrial scale.

In view of this, the object underlying the present invention is to provide a method of contacting a gas with a liquid in a column for mass transfer and/or heat exchange, wherein the contact of the gas with the liquid may lead to corrosion of the material used in the column and/or to the formation of a solid precipitate, such as in particular of contacting a carbon dioxide containing gas with a basic aqueous solution comprising ammonia and preferably further comprising one or more elements being able to chemically bond with a carbonate group or its multiple forming one or more solid carbonate salt(s), such as calcium ions and/or magnesium ions for converting the carbon dioxide, which is characterized by a high capacity and efficiency as well as by low capital expenditures and operational costs.

In accordance with the present invention, this object is solved by a method of contacting a gas with a liquid in a column for mass transfer and/or heat exchange comprising at least one structured cross-channel packing element, wherein preferably the contact of the gas with the liquid may lead to corrosion of the material of the at least one structured cross-channel packing element and/or to the formation of a solid precipitate, wherein the at least one structured cross-channel packing element is a block comprising a plurality of sheets with periodic deformations, wherein the sheets are arranged in the longitudinal direction parallel and in touching contact with each other so that an open space extending from one end to the opposite end of the sheets is provided between them, wherein the open space is defined by the periodic deformations, wherein adjacent sheets are oriented such that the periodic deformations of the adjacent sheets intersect in crisscross fashion with each other, wherein the sheets are non-perforated and made of a plastic, a metal or a metal alloy, and wherein the sheets are held together without any fixation means or with one or more ties or wires surrounding the plurality of sheets of the at least one structured cross-channel packing element.

This solution bases in the finding that by avoiding the usual fixation means for structured cross-channel packing elements, which are rods, screws, nails or the like being provided in the structured cross-channel packing element and extending through drill holes of the sheets so as to keep the sheets of the structured cross-channel packing element together, and thus by avoiding drill holes in the sheets of the structured cross-channel packing element as well as by using non-perforated sheets for the structured cross-channel packing element, a corrosion of the sheets is reliably avoided. Moreover, a welding of the different sheets of the structured cross-channel packing element together is not required in the present invention, which reduces thermal stress of the material of the sheets of the structured cross-channel packing element. It has been found by the inventors of the present invention that corrosion mainly occurs or at least starts at the edges of such drill holes and perforations in the sheets as well as at thermally stressed locations of the structured cross-channel packing element. By avoiding the corrosion by the aforementioned measurements, the lifespan of the structured cross-channel packing element in the column is high so as to significantly decrease the capital expenditures and operational costs of the column. In addition, the at least one structured cross-channel packing element significantly increases the mass transfer and heat exchange during the method within the column, thus leading to a particular high capacity and efficiency. Furthermore, the avoidance of perforations in the sheets reduces the number of dry zones, since a split-up of a liquid rivulet as occurring at a perforation may not occur. Moreover, the low pressure drop of a column with a structured cross-channel packing element is of further advantage. Furthermore, a leaching of components of the structured cross-channel packing element into the liquid during the method, such as a leaching of iron ions of metal sheets of the structured cross-channel packing element into the liquid, which may interfere with the reactions occurring during the method, such as by forming solid iron hydroxide and/or solid iron oxide, is reliably avoided.

In view of all this, it is particularly preferred that the at least one structured cross-channel packing element of the column used in the method in accordance with the present invention does not comprise any drill hole and does not comprise any welded part. Moreover, it is preferred that the at least one structured cross-channel packing element of the column used in the method in accordance with the present invention does not comprise nails, screws and bolts.

In accordance with one particularly preferred embodiment of the present invention, the sheets of the at least one structured cross-channel packing element are held together without any fixation means, i.e. for instance by assembling the single sheets of the at least one structured cross-channel packing element so that it exactly fits into the interior of the column so that the sheets of the at least one structured cross-channel packing element are pressed together by the inner surface of the wall of the column.

In accordance with an alternative particularly preferred embodiment of the present invention, the sheets of the at least one structured cross-channel packing element are held together with one or more ties or wires, such as strapping ties or strapping wires. The (strapping) ties or wires may be made of any suitable material, such as of a metal, of a metal alloy or of a plastic. Suitable metals and metal alloys are those being selected from the group consisting of stainless steel, aluminum, aluminum alloys, copper, copper alloys, gold, gold alloys, titanium, titanium alloys, zirconium, zirconium alloys, nickel, nickel-chrome alloys, silicon, silicon alloys and arbitrary combinations of two or more of the aforementioned materials. Good results are in particular obtained, when the (strapping) ties or wires are made of a metal or a metal alloy being selected from the group consisting of stainless steel, titanium, titanium alloys, zirconium, zirconium alloys, nickel-chrome alloys, silicon alloys and arbitrary combinations of two or more of the aforementioned materials. More preferably, the (strapping) ties or wires are made of stainless steel, such as duplex stainless steel, super duplex stainless steel, austenitic stainless steel, such as V2A stainless steel or V4a stainless steel. Also particularly preferably, the (strapping) ties or wires are made of a plastic and more preferably of a rubber or other elastomer, such as a plastic being selected from the group consisting of polypropylene, polyvinylidenfluoride, perfluoralkoxyethylene, polyethylene, polyvinylchloride, chlortrifluorethylene, polyether ether ketone and arbitrary combinations of two or more of the aforementioned plastics.

In accordance with the present invention, the sheets of the at least one structured cross-channel packing element are non-perforated, which means that the sheets of the at least one structured cross-channel packing element do not comprise any opening extending through any of the sheets, i.e. from one of its surfaces through the sheet to its opposite surface.

Preferably, the sheets of the at least one structured cross-channel packing element are made of a metal or a metal alloy, such as of a metal or a metal alloy being selected from the group consisting of stainless steel, aluminum, aluminum alloys, copper, copper alloys, gold, gold alloys, titanium, titanium alloys, zirconium, zirconium alloys, nickel, nickel-chrome alloys, silicon, silicon alloys and arbitrary combinations of two or more of the aforementioned materials. Good results are in particular obtained, when the sheets of the at least one structured cross-channel packing element are made of a metal or a metal alloy being selected from the group consisting of stainless steel, titanium, titanium alloys, zirconium, zirconium alloys, nickel-chrome alloys, silicon alloys and arbitrary combinations of two or more of the aforementioned materials. Most preferably, the sheets of the at least one structured cross-channel packing element are made of stainless steel, such as duplex stainless steel, super duplex stainless steel, austenitic stainless steel, such as V2A stainless steel or V4a stainless steel.

As set out above, the at least one structured cross-channel packing element of the column used in the method in accordance with the present invention preferably does not comprise locations which have been subjected to thermal stress. In view thereof, it is particularly preferred that the at least one structured cross-channel packing element of the column used in the method in accordance with the present invention has been produced without any punching, cutting, drilling and welding. For example, the sheets of the at least one structured cross-channel packing element may be prepared by using water jets, which avoids the necessity of cutting. For instance, the water jets used for sizing the sheets of the at least one structured cross-channel packing element of the column are generated with a pressure of 10 to 1,000 MPa, more preferably 50 to 500 MPa and most preferably 80 to 120 MPa, such as about 100 MPa. Alternatively, the sheets of the at least one structured cross-channel packing element may be prepared by using a cooled cutting disk or by using profiled scissors.

The present invention is not particularly limited concerning the kind of gas and liquid being contacted with each other in the column. As set out above, the method in accordance with the present invention is particularly suitable to capture carbon dioxide in an absorption process as solid carbonate, such as calcium carbonate. Preferably, the gas and the liquid are contacted in counter-current direction. However, the gas and the liquid may be also contacted in co-current direction or deadhead operation.

Suitable examples for the gas are pure carbon dioxide, air or a flue gas. Flue gas means any gas, which is obtained by combustion of a fuel, such as in particular of a fossil fuel or biomass fuel, in an industrial plant.

In a further development of the idea of the present invention, it is suggested that the liquid used in the method is a basic aqueous solution, i.e. an aqueous solution having a pH value of more than 7. Carbon dioxide is converted in a basic aqueous solution to hydrogen carbonate ions and to carbonate ions. Good results are in particular obtained when the basic aqueous solution has a pH value of at least 8, more preferably of at least 9 and still more preferably of at least 10. The upper boundary for the pH value is preferably 14 and more preferably 13. In addition, it is preferred that the basic aqueous solution further contains one or more alkaline metal ions and/or alkaline earth metal ions for forming a solid carbonate salt.

In accordance with a particular preferred embodiment of the present invention, the liquid used in the method is a basic aqueous solution comprising a basic compound, such as ammonia, and preferably further comprising one or more cations of elements, such as X, being able to chemically bond with a carbonate group or its multiple forming one or more solid carbonate salt(s), such as Xₘ(CO₃)ₙ or Xₘ(CO₃)ₙ·H₂O. Suitable examples for such cations of elements are calcium, magnesium, sodium, potassium, sulfur, boron, silicon, strontium, iron and combinations thereof. Good results are in particular obtained with divalent metal cations, such as calcium cations and magnesium cations forming calcium carbonate compounds and magnesium carbonate compounds, respectively. Specific carbonate compounds of interest include, but are not limited to calcium carbonate minerals, magnesium carbonate minerals and calcium magnesium carbonate minerals. Thereby, the carbon dioxide is first dissolved in the basic aqueous solution as hydrogen carbonate ions and carbonate ions, before it is converted to calcium carbonate and/or magnesium carbonate. Good results are in particular obtained, when the concentration of the ammonia in the basic aqueous solution is 0.1 to 20 molar and more preferably 0.1 to 5 molar, whereas the concentration of calcium and magnesium ions is preferably0.001 to 10 molar and more preferably 0.05 to 2 molar. Instead of the ammonia also other basic compounds such as amines, may be used.

Alternatively, it is also possible to contact in the column for mass transfer and/or heat exchange comprising at least one structured cross-channel packing element a gas with a liquid being a basic aqueous solution, which does not comprise any cations of an element being able to chemically bond with a carbonate group or its multiple forming one or more solid carbonate salt(s), and to add after exiting column one or more cations of an element being able to chemically bond with a carbonate group or its multiple forming one or more solid carbonate salt(s) so as to form the one or more solid carbonate salt(s) downstream of the column.

In a further development of the idea of the present invention it is suggested that the gas is fed into the column with a temperature of -10 to 100°C and more preferably with a temperature of 20 to 80°C, whereas the liquid is fed into the column with a temperature of 20 to 60°C and more preferably with a temperature of 25 to 40°C.

Good results are in particular obtained, when the gas is contacted with the liquid in the column at a pressure of 100 kPa to 10 MPa and preferably of 100 kPa to 1 MPa.

In order to accelerate the conversion of carbon dioxide to hydrogen carbonate ions and/or carbonate ions and/or in order to accelerate the conversion into a solid carbonate salt, the gas may be contacted with the liquid in the column in the presence of a catalyst. Good results are in particular obtained, when the catalyst is selected from the group consisting of enzymes, such as carbonic anhydrases, of synthetic catalysts, such as zinc complexes of aza-macrocyclic ligands and nickel nanoparticles and arbitrary combinations of two or more of the aforementioned catalysts.

In addition, the liquid may comprise from its water source one or more impurities, such as arsenic, cadmium, chromium, mercury and/or lead.

In order to improve the wettability of the sheets of the at least one structured cross-channel packing element, the surfaces of the sheets of the at least one structured cross-channel packing element may be at least partially textured and preferably microtextured. For instance, the surfaces of the sheets may comprise a fine structuring or patterning defining a network of crossing channels with bases. The channels may be bounded by the flanks of, for example, pyramidal protuberances and depressions. Thereby, liquid flowing along the channels is distributed uniformly over the surfaces of the sheets by capillary action and gravity. Also, a satisfactory cross-mixture of the liquid occurs, since the liquid flows between channels at the channel intersections.

In accordance with a further particular preferred embodiment of the present invention, at least one, more preferably some and still more preferably all of the periodic deformations of adjacent sheets of the at least one structured cross-channel packing element comprise(s) an indentation which avoids a touching contact in the area of the indentation with a periodic deformation of an adjacent sheet so that the total number of contact points between adjacent sheets is reduced compared to a structured cross-channel packing element without any indentations. The reduction of contact points reduces the fouling during the method, since it reduces the number of narrow points facilitating the deposition and agglomeration of solid precipitate.

Good results are in particular achieved, when the periodic deformations of the at least one structured cross-channel packing element are corrugations comprising a plurality of alternately oriented peaks and valleys, wherein the peaks of a sheet contact the valleys of an adjacent sheet and the valleys of a sheet contact the peaks of an adjacent sheet, wherein adjacent sheets are oriented such that the peaks and valleys of the adjacent sheets intersect in crisscross fashion with the peaks and valleys of the sheets extending obliquely relative to the longitudinal direction. The peaks and valleys may have a square, a triangular, a sinusoidal or a meander-type cross-section. Again, preferably at least one, more preferably some and still more preferably all of the peaks and/or valleys comprise(s) an indentation which avoids a touching contact in the area of the indentation with a peak and/or valley of an adjacent sheet so that the total number of contact points between adjacent sheets is reduced compared to a structured cross-channel packing element without any indentations.

Good results are in particular obtained in this embodiment, when the angle α between each of the peaks and each of the valleys of a structured cross-channel packing element with respect to the longitudinal direction is 10° to 60°, preferably 15° to 50° and most preferably 20° to 47°, wherein the peaks and valleys of adjacent sheets are preferably oriented in opposing directions. This allows a uniform distribution of the gas phase over at least one direction of the cross-section the structured cross-channel packing element. The angles should not be too large to minimize pressure drop and maximize capacity.

In order to reduce the pressure loss of the structured cross-channel packing element, it is proposed in a further development of the idea of the present invention that the peaks and valleys of the structured cross-channel packing element are bended in the terminal zones of the sheets in relation to the peaks and valleys of the central zone being arranged between the terminal zones so that the flow resistance in the terminal zones of the structured cross-channel packing element is reduced with respect to that of the zone arranged between the terminal zones. Accordingly, the peaks and valleys of the sheets of the structured cross-channel packing element of this embodiment do not extend linearly. Preferably, the peaks and valleys are bended in the terminal zones of the corrugated sheets so as to extend at least essentially vertically. Essentially vertical means that the peaks and valleys are inclined at the lower and upper edges of the sheets by less than angle α, preferably by not more than 10°, more preferably not more than 5° and even more preferably not more than 2° to the vertical direction or longitudinal direction of the structured cross-channel packing element, respectively. The terminal zones are the uppermost and the lowermost zones of the corrugated sheets extending from the upper and lower edges of the sheets 30%, preferably 25% and more preferably 20% or less along the length of the corrugated sheet, which is the direction along the longitudinal direction of the sheet. Each of the terminal zones may have peaks and valleys with a different height than those of the central zone, which is the zone of the sheet between the two terminal zones. Instead of providing such bends or different heights in both terminal zones, they may only be present in one of the terminal zones.

The present invention is not particularly limited concerning the specific surface area of the at least one structured cross-channel packing element. However, good results are in particular obtained, when the specific surface area of the at least one structured cross-channel packing element is 60 to less than 500 m²/m³, more preferably 100 to less than 500 m²/m³, still more preferably 100 to 400 m²/m³, even more preferably 200 to 400 m²/m³ and most preferably 250 to 350 m²/m³. The specific surface area means in accordance with the present invention the geometrical area of the structured cross-channel packing element divided by the volume that the structured cross-channel packing element occupies. The geometrical area of the structured cross-channel packing element is the sum of the geometrical area of all sheets comprised in the structured cross-channel packing element, wherein the geometrical area of a sheet adds up both sides of the sheet.

In a further development of the idea of the present invention it is proposed that the column used in the method in accordance with the present invention comprises a structured packing bed, which comprises at least two layers, wherein the at least two layers are stacked vertically above each other, and wherein the at least two layers comprise each at least one structured cross-channel packing element. In tendency, the higher the diameter of the structured packing bed, the higher the number of structured packing elements per layer.

In order to have the same performance over the whole cross-section of each layer, it is suggested in a further development of the idea of the present invention that each layer of the structured packing bed is homogenous over its cross-section. In view thereof, it is preferred that, if one or more of the layers of the structured packing bed comprise more than one structured cross-channel packing element, all structured cross-channel packing elements of a layer have essentially the same height and more preferably the same height.

Good results are in particular obtained, when all of the structured cross-channel packing elements of the at least two layers have essentially the same specific surface area or preferably the same specific surface area, wherein essentially the same specific surface area means that each structured cross-channel packing element of the layer has a specific surface area of 80 to 120%, preferably 90 to 110%, more preferably of 95 to 105% and even more preferably of 98 to 102% of the average specific surface area of all structured cross-channel packing elements of the layer.

In order to achieve a very good gas distribution in the structured packing bed, preferably at least one of the structured cross-channel packing element(s) of a layer is rotated with regard to at least one of the structured cross-channel packing element(s) of an adjacent layer by 70 to 110°. This means that the parallel sheets of one of the respective structured cross-channel packing elements are, seen in the cross-sectional plane, twisted or rotated, respectively, by 70 to 110° to the parallel sheets of the respective structured cross-channel packing elements of an adjacent layer. Preferably, the at least one of the structured cross-channel packing element(s) of a layer is rotated by 70 to 110° with regard to at least one of the structured cross-channel packing element(s) of an adjacent layer being arranged above or below the structured cross-channel packing element. Good results are in particular achieved, when in the aforementioned embodiments the respective structured cross-channel packing element(s) are rotated with regard to each other by 80 to 100°, more preferably by 85 to 95° and most preferably by 88 to 92°, such as by 90°.

Preferably, the structured packing bed comprises 2 to 50 layers, preferably 8 to 25 layers and more preferably 12 to 20 layers of structured cross-channel packing elements.

In accordance with a further preferred embodiment of the present invention, the structured packing bed has a circular or rectangular cross-section and the diameter or length of the structured packing bed is 0.8 to 20 m and preferably 1 to 15 m.

In accordance with another aspect, the present invention relates to a structured cross-channel packing element, which is a block comprising a plurality of sheets with periodic deformations, wherein the sheets are arranged in the longitudinal direction parallel and in touching contact with each other so that an open space extending from one end to the opposite end of the sheets is provided between them, wherein the open space is defined by the periodic deformations, wherein adjacent sheets are oriented such that the periodic deformations of the adjacent sheets intersect in crisscross fashion with each other, wherein the sheets are non-perforated and made of a plastic, a metal or a metal alloy, and wherein the sheets are held together without any fixation means or with one or more ties or wires surrounding the plurality of sheets of the at least one structured cross-channel packing element.

All of the aforementioned preferred embodiments described for the structured cross-channel packing element used in the method are also preferred for the structured cross-channel packing element.

In particular, it is preferred that the structured cross-channel packing element does not comprise any drill hole, does not comprise any welded part and does not comprise nails, screws and bolts.

In accordance with yet another aspect, the present invention relates to a structured packing bed for a column for mass transfer and/or heat exchange, wherein the structured packing bed comprises at least two layers, wherein the at least two layers are stacked vertically above each other, wherein at least two of the at least two layers comprise each at least one of the aforementioned structured cross-channel packing elements.

A further subject matter of the present invention is a mass transfer and/or heat exchange column comprising at least one of the aforementioned structured packing beds.

Preferably, the mass transfer and/or heat exchange column has a circular or rectangular cross-section and the inner diameter of the mass transfer and/or heat exchange column is 0.8 to 20 m and more preferably 1 to 15 m.

Specific embodiments in accordance with the present invention are subsequently described with reference to the appended drawings and by examples.
- Fig. 1: is a schematic side view of a mass and/or heat exchange column including two structured packing beds with each comprising several layers of structured cross-channel packing elements according to one embodiment of the present invention.
- Fig. 2a: is an explosion view of a part of the sheets of a structured cross-channel packing element according to one embodiment of the present invention.
- Fig. 2b: is a schematic side view of the structured cross-channel packing element shown in figure 2a.
- Fig. 3: is a schematic perspective view of a structured cross-channel packing element according to another embodiment of the present invention.
- Fig. 4: is a fragmentary view of a structured cross-channel packing element used in a structured packing bed according to another embodiment of the present invention.

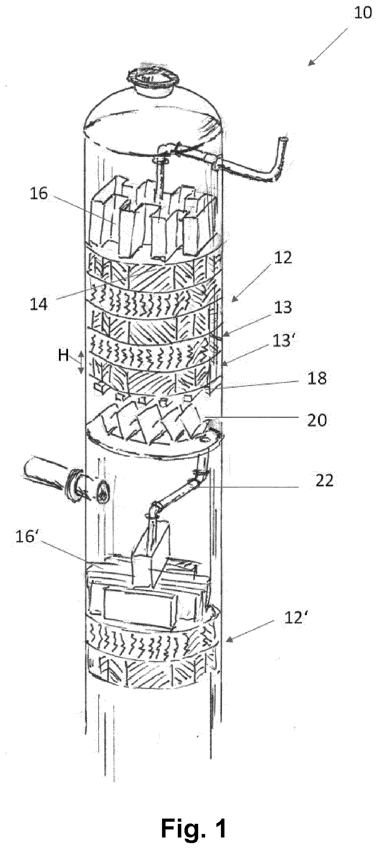

Figure 1 shows - in a schematic side view - a mass transfer column 10 and more specifically an absorption column 10 according to one embodiment of the present invention (the transparent inside of the figure is only for illustrative purposes). The absorption column 10 comprises two structured packing bed beds 12, 12', wherein each of the structured packing bed beds 12, 12' comprises several layers 13, 13', with each of the layers 13, 13' comprising several structured cross-channel packing elements 14. Above each of the two beds 12, 12' a distributor 16, 16' is arranged to evenly distribute the liquid over the cross-section of the structured packing bed 12, 12', while leaving enough space for the vapor to ascend through it. Below each bed 12, 12' a grid-like holding device 18 and a collector 20 are arranged (not shown for bed 12'), wherein the grid-like holding device 18 keeps the bed 12 at its position and the collector 20 collects the liquid trickling down from the bed 12, while sufficient open space is left in the collector for the vapor to ascend. All layers 13, 13' of both structured packing bed beds 12, 12' are composed exclusively of structured cross-channel packing elements 14, wherein each of the structured cross-channel packing elements 14 has the same height H and the same specific surface area.

During the operation of the absorption column 10, gas ascends as light phase from the bottom to top, whereas liquid as heavy phase descends in counter-current from the top to the bottom of the absorption column 10. More specifically, the liquid is essentially homogenously distributed by the distributor 16 over the cross-section of the structured packing bed 12 and trickles down along the surfaces of the sheets of the structured cross-channel packing elements 14. Between the different sheets of the structured cross-channel packing elements 14 open spaces are provided, which are filled with the gas and provide a path for the gas to ascend, while it is driven by a pressure gradient. By allowing the liquid to spread on the surface of the sheets of the structured cross-channel packing elements 14, a large interface is created between the two phases so that an efficient heat and mass transfer between the liquid and the gas is established at the interface. At the bottom of the bed 12, the liquid is collected in the collector 20 and guided via the pipe 22 down to the distributor 16' above the second bed 12'.

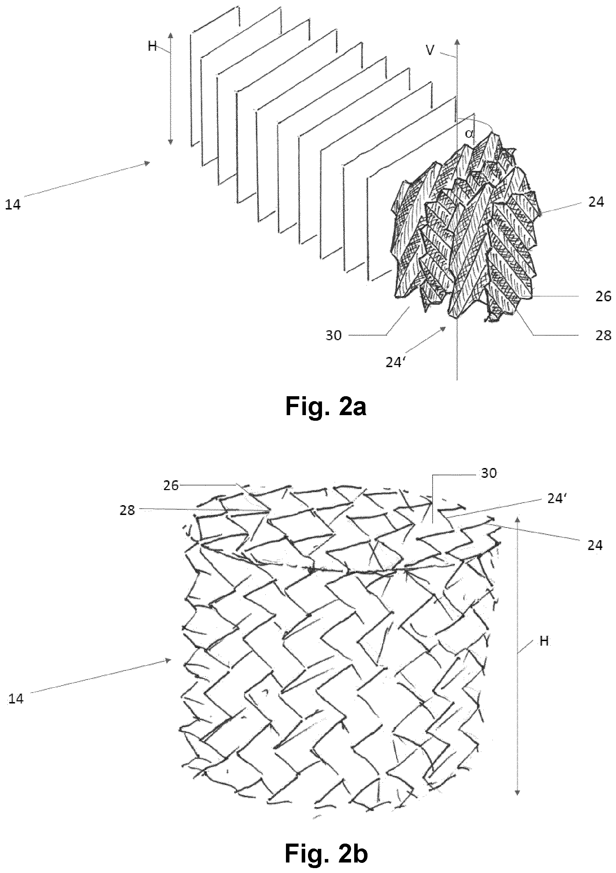

Figures 2a to 2b show a structured cross-channel packing element 14 according to the present invention. The structured cross-channel packing element 14 is assembled from a plurality of non-perforated corrugated sheets 24, 24', which are parallel and in touching contact with each other. Each corrugated sheet 24, 24' comprises a plurality of alternately oriented peaks 26 and valleys 28, wherein adjacent corrugated sheets 24, 24' are oriented such that the corrugations 26, 28 of the adjacent corrugated sheets 24, 24' intersect in crisscross fashion with the corrugations 26, 28 of the corrugated sheets 24, 24' extending obliquely relative to the longitudinal direction V, thus forming inclined channels 30 which continuously cross one another. More specifically, the angle α between each of the peaks 26 and each of the valleys 28 with respect to the longitudinal direction V is 10° to 60°, preferably 15° to 50° and most preferably 20° to 47°, wherein the peaks 26 and valleys 28 of adjacent corrugated sheets 24, 24' are oriented in opposing directions. The channels 30 define a maximum distance between adjacent corrugated sheets 24, 24', such as for example of 20 mm. These channels 30 positively influence the flows of the gas phase and of the liquid phase within the structured cross-channel packing element 14 and facilitate the mass transfer between the phases. That is, the gas phase and liquid phase are brought into contact in the channels 30 of the structured cross-channel packing element 14 and the mass transfer as well as the heat transfer between the phases is thus facilitated. More specifically, ascending gas comes into contact with liquid, which is present on the surface of the corrugated sheets 24, 24' defining the channels 30, when it flows downwardly through the mass transfer column. All in all, the light phase flows through the open space or channels 30, respectively, which leads to a particular efficient mass and energy transfer between the light and heavy phases. Moreover, the crisscross fashion of the channels 30 leads to an optimal distribution of the phases from left to right. In accordance with the present invention, the structured cross-channel packing element 14 does not comprise any drill hole, does not comprise any perforation, does not comprise any welded part and does not comprise any fixation means, such as nails, screws and bolts. Thereby, the initiation of corrosion at such locations cannot occur, which significantly reduces the corrosion of the structured cross-channel packing element 14 even if it is operated with corrosive liquids.

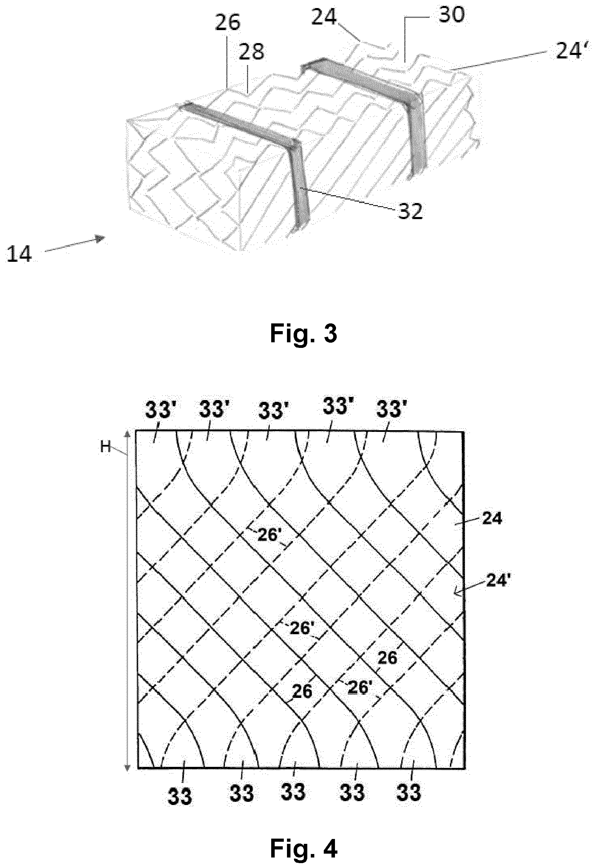

Figure 3 shows a structured cross-channel packing element 14 according to another embodiment of the present invention. The structured cross-channel packing element 14 shown in figure 3 corresponds to that shown in figure 2 except that it comprises as fixation means strapping ties 32, which surround the plurality of sheets 24, 24' of the structured cross-channel packing element 14.

Figure 4 shows a fragmentary view of a structured cross-channel packing element 14 to be used in a structured packing bed 12, 12' in accordance with an alternative embodiment of the present invention. The structured packing element 14 of figure 4 is similar to that shown in Figures 2a to 2b except that corrugated sheets 24, 24' do not comprise linear extending peaks and valleys, but that the peaks 26, 26' and valleys of the corrugated sheets 24, 24' are bended in the terminal zones or portions 33, 33', respectively, so as to extend in the terminal zones 33, 33' of the corrugated sheets 24, 24' essentially in the vertical direction. The terminal zones are the uppermost and the lowermost zones 33, 33' of the corrugated sheets 24, 24' extending from the upper and lower edges of the corrugated sheets 24, 24' 30%, preferably 25% and more preferably 20% or less along the length of the corrugated sheets 24, 24', which is the direction along the longitudinal direction V of the corrugated sheets 24, 24'. Each of the terminal zones 33, 33' may have peaks 26, 26' and valleys with a different height than those of the central zone, which is the zone of the corrugates sheets 24, 24' between the two terminal zones 33, 33'. Such features as the different height or the bend may be present in both terminal zones 33, 33'of the corrugated sheets 24, 24' only. In Figure 4, the solid lines depict the peaks 26 of the corrugations in the face of the corrugated sheet 24 presented to the viewer, while the broken lines 26' depict the peaks of the corrugations in the corresponding face of the corrugated sheet 24' immediately behind the one in view. By bending the terminal zones 33, 33' so as to extend in the terminal zones 33, 33' of the corrugated sheets 24, 24' essentially in the vertical direction, the flow resistance of the terminal zones 33, 33' of the corrugated sheets 24, 24' is reduced compared to the flow resistance of the zones being located between the terminal zones 33, 33' of the corrugated sheets 24, 24'. This leads to a reduced pressure loss of the structured packing element.

### List of Reference Numerals and Abbreviations

- 10: Mass transfer column / absorption column
- 12, 12': Structured packing bed
- 13, 13': Layer of a structured packing bed
- 14: Structured cross-channel packing element
- 16, 16': Distributor
- 18: Holding device
- 20: Collector
- 22: Pipe
- 24, 24': Corrugated sheets
- 26: Peak of a corrugated sheet
- 26': Peak of an adjacent corrugated sheet
- 28: Valley
- 30: Channel / open space
- 32: Strapping tie
- 33, 33': Terminal zones of a corrugated sheet

- H: Height of structured cross-channel packing element
- V: Longitudinal direction, which is usually the vertical direction

- α: Angle between each of the peaks and each of the valleys with respect to the longitudinal direction

## Claims

1. A method of contacting a gas with a liquid in a column (10) for mass transfer and/or heat exchange comprising at least one structured cross-channel packing element (14), wherein the contact of the gas with the liquid may lead to corrosion of the material of the at least one structured cross-channel packing element (14) and/or to the formation of a solid precipitate, wherein the at least one structured cross-channel packing element (14) is a block comprising a plurality of sheets (24, 24') with periodic deformations, wherein the sheets (24, 24') are arranged in the longitudinal direction (V) parallel and in touching contact with each other so that an open space (30) extending from one end to the opposite end of the sheets (24, 24') is provided between them, wherein the open space (30) is defined by the periodic deformations, wherein adjacent sheets (24, 24') are oriented such that the periodic deformations of the adjacent sheets (24, 24') intersect in crisscross fashion with each other, wherein the sheets (24, 24') are non-perforated and made of a plastic, a metal or a metal alloy, and wherein the sheets (24, 24') are held together without any fixation means or with one or more ties (32) or wires surrounding the plurality of sheets (24, 24') of the at least one structured cross-channel packing element (14).

2. The method according to claim 1, wherein the at least one structured cross-channel packing element (14) does not comprise any drill hole and does not comprise any welded part.

3. The method according to claim 1 or 2, wherein the sheets (24, 24') of the at least one structured cross-channel packing element (14) are held together without any fixation means or are held together with one or more strapping ties (32) or wires being made of a plastic, of a metal or of a metal alloy and preferably of a plastic.

4. The method according to any of the preceding claims, wherein the sheets (24, 24') of the at least one structured cross-channel packing element (14) are made of a metal or a metal alloy being selected from the group consisting of stainless steel, aluminum, aluminum alloys, copper, copper alloys, gold, gold alloys, titanium, titanium alloys, zirconium, zirconium alloys, nickel, nickel-chrome alloys, silicon, silicon alloys and arbitrary combinations of two or more of the aforementioned materials.

5. The method according to any of the preceding claims, wherein the sheets (24, 24') of the at least one structured cross-channel packing element (14) have been prepared without cutting and preferably by using water jets, cooled cutting disks or profiled scissors.

6. The method according to any of the preceding claims, wherein the gas is pure carbon dioxide, air or a flue gas.

7. The method according to any of the preceding claims, wherein the liquid is a basic aqueous solution preferably further comprising one or more alkaline metal ions and/or alkaline earth metal ions, wherein preferably the liquid is a basic aqueous solution comprising ammonia and preferably further comprising calcium ions and/or magnesium ions.

8. The method according to any of the preceding claims, wherein at least one, preferably some and more preferably all of the periodic deformations of adjacent sheets (24, 24') of the at least one structured cross-channel packing element (14) comprise(s) an indentation which avoids a touching contact in the area of the indentation with a periodic deformation of an adjacent sheet (24, 24') so that the total number of contact points between adjacent sheets (24, 24') is reduced compared to a structured cross-channel packing element (14) without any indentations.

9. The method according to any of the preceding claims, wherein the periodic deformations of the at least one structured cross-channel packing element (14) are corrugations comprising a plurality of alternately oriented peaks (26, 26') and valleys (28, 28'), wherein the peaks (26) of a sheet (24) contact the valleys (28') of an adjacent sheet (24') and the valleys (28) of a sheet (24) contact the peaks (26') of an adjacent sheet (24), wherein adjacent sheets (24, 24') are oriented such that the peaks (26, 26') and valleys (28, 28') of the adjacent sheets (24, 24') intersect in crisscross fashion with the peaks (26, 26') and valleys (28, 28') of the sheets (24, 24') extending obliquely relative to the longitudinal direction (V).

10. The method according to any of the preceding claims, wherein the column (10) comprises a structured packing bed (12, 12'), which comprises at least two layers (13, 13'), wherein the at least two layers (13, 13') are stacked vertically above each other, and wherein the at least two layers (13, 13') comprise each at least one structured cross-channel packing element (14).

11. The method according to any of the preceding claims, wherein the structured cross-channel packing elements (14) of a layer (13, 13') are rotated by 70 to 110°, preferably by 80 to 100°, more preferably by 85 to 95° and most preferably by 88 to 92° with regard to an adjacent structured cross-channel packing element (14) of an adjacent layer (13, 13') of the structured packing bed (12, 12').

12. A structured cross-channel packing element (14), which is a block comprising a plurality of sheets (24, 24') with periodic deformations, wherein the sheets (24, 24') are arranged in the longitudinal direction (V) parallel and in touching contact with each other so that an open space (30) extending from one end to the opposite end of the sheets (24, 24') is provided between them, wherein the open space (30) is defined by the periodic deformations, wherein adjacent sheets (24, 24') are oriented such that the periodic deformations of the adjacent sheets (24, 24') intersect in crisscross fashion with each other, wherein the sheets (24, 24') are non-perforated and made of a plastic, a metal or a metal alloy, and wherein the sheets (24, 24') are held together without any fixation means or with one or more ties (32) or wires surrounding the plurality of sheets (24, 24') of the at least one structured cross-channel packing element (14).

13. The structured cross-channel packing element (14) according to claim 12, wherein the structured cross-channel packing element (14) does not comprise any drill hole and does not comprise any welded part.

14. A structured packing bed (12, 12') for a column (10) for mass transfer and/or heat exchange, wherein the structured packing bed (12, 12') comprises at least two layers (13, 13'), wherein the at least two layers (13, 13') are stacked vertically above each other, wherein at least two of the at least two layers (13, 13') comprise each at least one structured cross-channel packing element (14) according to claim 12 or 13.

15. A mass transfer and/or heat exchange column (10) comprising at least one structured packing bed (12, 12') according to claim 14.
